(19) Europäisches Patentamt

European Patent Office

Office européen des brevets

(11) Veröffentlichungsnummer: **0 233 563**
**A2**

(12) **EUROPÄISCHE PATENTANMELDUNG**

(21) Anmeldenummer: **87101695.2**

(22) Anmeldetag: **07.02.87**

(51) Int. Cl.⁴: **B64G 1/00**

(30) Priorität: **18.02.86 DE 3605096**

(43) Veröffentlichungstag der Anmeldung:
**26.08.87 Patentblatt 87/35**

(84) Benannte Vertragsstaaten:
**FR GB IT NL**

(71) Anmelder: **ERNO Raumfahrttechnik**
**Gesellschaft mit beschränkter Haftung**
**Hünefeldstrasse 1-5**
**D-2800 Bremen(DE)**

(72) Erfinder: **Bischof, Bernd**
**Leeskamp 17**
**D-2875 Ganderkesee(DE)**
Erfinder: **Nauck, Joachim, Dr.Dipl.-Ing.**
**Fitgerstrasse 15**
**D-2800 Bremen 1(DE)**

(54) **Kombinierte Satelliteneinrichtung für globale Fernmeldeversorgung und/oder Positionsbestimmung.**

㊗ Die Erfindung bezieht sich auf eine kombinierte Erdsatelliteneinrichtung für die globale Fernmeldeversorgung und/oder Positionsbestimmung mit wenigstens achtzehn Erdsatelliten auf geostationären Erdumlaufbahnen und auf elliptischen Umlaufbahnen mit hoher Bahnneigung zum Äquator, die geostationär Positionsschleifen an der Himmelshalbkugel beschreiben. Durch die Mitbenutzung von vorhandenen oder zu plazierenden Fernmelde-, Wetter- und/oder Forschungssatelliten auf diesen Bahnen kann auf den Aufbau eines alleinigen Positionsbestimmungs-Satellitensystems verzichtet werden.

EP 0 233 563 A2

## Kombinierte Erdsatelliteneinrichtung für globale Fernmeldeversorgung und/oder Positionsbestimmung

Die Erfindung betrifft eine kombinierte Erdsatelliteneinrichtung für globale Fernmeldeversorgung und/oder Positionsbestimmung auf der Basis von mindestens achtzehn Satelliten auf geostationären Erdumlaufbahnen und Erdumlaufbahnen mit geostationären Positionsschleifen.

Fernmeldesatellitensysteme und Positionsbestimmungssatellitensysteme wurden bisher als voneinander getrennte Einrichtungen genutzt. Die Fernmeldesatelliten umlaufen die Erde in der Regel auf geostationären Kreisbahnen oder auf sogenannten stark elliptischen Molnija-Bahnen, wobei letztere für die Versorgung hoher nördlicher oder südlicher Breiten besser geeignet sind, aber ein Nachführen der Sende-/Empfangsantennen erfordern. In der DE-PS 3l 45 207 wird ein gerade für hohe nördliche und südliche Breiten geeignetes Fernmeldesatellitensystem vorgestellt, das diese Nachteile durch die Nutzung von elliptischen Umlaufbahnen vermeidet, die aufgrund ihrer Bahnkennwerte sogenannte Positionsschleifen mit geringer Winkelausdehnung auf der Himmelshalbkugel beschreiben. Verläßt ein Fernmeldesatellit diese Positionsschleife, so hat sich der nächste Satellit bereits so dieser Position genähert, daß ein verlustfreier Nachrichtenstrom durch Umschalten von dem ersten auf den zweiten Fernmeldesatelliten ohne Veränderung der Position der Sende-/Empfangsantenne möglich ist (LOOPUS-Bahnsysteme; LOOPUS = Loops Occupied Permanently By Unstationary Satellites).

Positionsbestimmungssatellitensysteme können sowohl auf geostationären Erdumlaufbahnen betrieben werden (GEOSTAR-Konzept), als auch auf kreis-oder ellipsenförmigen Erdumlaufbahnen eingerichtet werden (GPS-NAVSTAR-Konzept, GRANAS-Konzept, NAVSAT-Konzept). Die geostationären Erdumlaufbahnen bieten dabei den Vorteil der scheinbar festen Position der Satelliten an der Himmelshalbkugel, ihr Nachteil ist aber die - schlechte Erfassung der hohen nördlichen und südlichen Breiten der Erde.

Der Erfindung liegt die Aufgabe zugrunde, eine kombinierte Erdsatelliteneinrichtung für die globale Fernmeldeversorgung und/oder Positionsbestimmung zu schaffen. Diese Aufgabe wird erfindungsgemäß dadurch gelöst, daß vorhandene Fernmeldesatellitensysteme auf geostationären Erdumlaufbahnen und auf elliptischen Erdumlaufbahnen mit geostationären Positionsschleifen mit Zusatznutzlasten versehen und so auf ihren Erdumlaufbahnen plaziert werden, daß zu jedem Zeitpunkt und an jedem Ort mindestens vier Satelliten für Sende-/Empfangseinrichtungen sichtbar sind.

Diese Voraussetzungen für eine Positionsbestimmung werden dadurch erfüllt, daß wenigstens sechs Satelliten dieser Einrichtung gleichverteilt auf geostationären Erdumlaufbahnen die Erde umkreisen und daß weitere wenigstens zwölf Satelliten die Erde auf elliptischen Erdumlaufbahnen in zwei nördlichen und zwei südlichen LOOPUS-Bahnsystemen umlaufen. So sind für Sende-/Empfangseinrichtungen in Äquatornähe mindestens je ein Satellit aus einem nördlichen und einem südlichen LOOPUS-Bahnsystem sowie zwei geostationäre Satelliten sichtbar, während Sende-/Empfangseinrichtungen in nördlichen Breiten mindestens zwei geostationäre Satelliten und zwei Satelliten aus den nördlichen LOOPUS-Bahnsystemen sehen können. In Nordpolnähe sind dagegen mindestens vier Satelliten aus den beiden nördlichen LOOPUS-Bahnsystemen sichtbar.

Analoge Betrachtungen können für die Erdsüdhalbkugel angestellt werden.

Ein Vorteil dieser kombinierten Fernmelde-und/oder Positionsbestionsbestimmungseinrichtung liegt darin, daß durch die Anwendung von LOOPUS-Bahnsystemen gegenüber den bisher für diese Anwendung vorgeschlagenen Molnija-Bahnen eine unterbrechungsfreie und mit geringerem technischen Aufwand betreibbare Nachrichtenübertragung möglich ist.

Ein weiterer Vorteil ist, daß der Aufbau eines zusätzlichen Satellitensystems zur Positionsbestimmung vermieden wird, indem vorhandene Fernmeldesatelliten (-systeme) bei ihrem Ausfall oder ihrer Ergänzung durch mit einer Zusatzlast zur Positionsbestimmung versehenen Fernmeldesatelliten ausgebaut werden. Alle Struktur-und Versorgungsteile des neuen Fernmeldesatelliten können so auch für die Positionsbestimmung genutzt werden, ohne daß dafür ein gesonderter Satellit gebaut und plaziert werden müßte.

Der Aufbau dieser kombinierten Fernmelde-und Positionsbestimmungseinrichtung kann in kleinen Schritten erfolgen (zum Beispiel Austausch von ausgefallenen Satelliten oder Ausbau des Fernmeldesatellitensystems) und erfordert dadurch einen nur relativ kleinen zusätzlichen Finanzbedarf, der zudem auf viele mögliche Betreiber (national, multinational, privat) verteilbar ist. Dabei können die Erstellungsschritte einer solchen Einrichtung durch den Demonstrationsbetrieb für eine begrenzte Erdregion (zum Beispiel Europa, USA) den Erdteilbetrieb (Region: Europa-Atlantik-USA) und den globalen Betrieb gekennzeichnet sein.

Als weitere Ausgestaltung der Erfindung ist es möglich, daß nicht nur geostationäre Fernmeldesatelliten für den Aufbau des kombinierten Erdsatellitensystems für globale Fernmeldeversorgung und Positionsbestimmung berücksichtigt werden. So könnten zum Beispiel auch geostationäre Wetter- und/oder Forschungssatelliten in diese Richtung einbezogen werden.

**Ansprüche**

I. Kombinierte Erdsatelliteneinrichtung für globale Fernmeldeversorgung und/oder Positionsbestimmung, dadurch **gekennzeichnet**, daß

a) insgesamt wenigstens achtzehn Erdsatelliten auf zwei unterschiedlichen Erdumlaufbahntypen die Erde umkreisen,

b) wenigstens sechs Satelliten die Erde gleichverteilt geostationär umkreisen (Typ I),

c) die restlichen wenigstens zwölf Satelliten auf ähnlichen Umlaufbahnen hoher Bahnneigung zum Äquator, mit jeweils wenigstens einem Satelliten pro Bahn, die Erde umkreisen (Typ 2),

d) die Schaffung einer zusätzlichen Positionsbestimmungseinrichtung auf der Grundlage von erdumkreisenden Satelliten vermieden wird, indem vorhandene Satellitensysteme auf den Bahntypen I und 2 mit geringen Zusatzausrüstungen versehen werden.

2. Kombinierte Erdsatelliteneinrichtung für die globale Fernmeldeversorgung und/oder Positionsbestimmung gemäß Anspruch I, dadurch **gekennzeichnet**, daß die Erdumlaufbahnen mit hoher Bahnneigung zum Äquator elliptische Bahnen sind und sowohl im Bereich der Erdnordhalbkugel als auch im Bereich der Erdsüdhalbkugel je zwei sogenannte LOOPUS-Bahnsysteme bilden.

3. Kombinierte Erdsatelliteneinrichtung für die globale Fernmeldeversorgung und/oder Positionsbestimmung gemäß den Ansprüchen I und 2, dadurch **gekennzeichnet**, daß ein sogenanntes LOOPUS-Bahnsystem aus drei Erdumlaufbahnen besteht, die mit je einem Satelliten besetzt sind.

4. Kombinierte Erdsatelliteneinrichtung für die globale Fernmeldeversorgung und/oder Positionsbestimmung gemäß den Ansprüchen I bis 3, dadurch **gekennzeichnet**, daß die Bodenspur auf der Erde der beiden LOOPUS-Bahnsysteme - (nördlich/südlich) in den Schleifenbereichen jeweils um je 90° gegeneinander versetzt sind.

5. Kombinierte Erdsatelliteneinrichtung für die globale Fernmeldeversorgung und/oder Positionsbestimmung gemäß den Ansprüchen I bis 5, dadurch **gekennzeichnet**, daß die Erdumlaufbahnen in den beiden nördlichen LOOPUS-Bahnsystemen ihren erdfernsten Punkt über der Erdnordhalbkugel haben, während die Erdumlaufbahnen in den beiden südlichen LOOPUS-Bahnsystemen ihren erdfernsten Punkt über der Erdsüdhalbkugel aufweisen.

6. Kombinierte Erdsatelliteneinrichtung für die globale Fernmeldeversorgung und/oder Positionsbestimmung gemäß den Ansprüchen I bis 4, dadurch **gekennzeichnet**, daß zu jedem Zeitpunkt und an jedem Ort der Erde mindestens vier Erdsatelliten für Empfangs- und Sendeeinrichtungen sichtbar sind.